(19) **Europäisches Patentamt / European Patent Office / Office européen des brevets**

(11) **EP 1 330 054 B1**

(12) **EUROPEAN PATENT SPECIFICATION**

(45) Date of publication and mention
of the grant of the patent:
**03.01.2007 Bulletin 2007/01**

(51) Int Cl.:
*H04B 10/155* (2006.01)

(21) Application number: **03000081.4**

(22) Date of filing: **08.01.2003**

(54) **System and method for multi-level phase modulated communication**

System und Verfahren zur Mehrpegel-Phasenmodulationübertragung

Système et méthode de communication de modulation de phase multiniveaux

(84) Designated Contracting States:
**DE FR GB**

(30) Priority: **18.01.2002 US 52886**

(43) Date of publication of application:
**23.07.2003 Bulletin 2003/30**

(73) Proprietor: **FUJITSU LIMITED**
**Kawasaki-shi,**
**Kanagawa 211-8588 (JP)**

(72) Inventors:
• **Choudhary, Seemant**
**Dallas, TX 75243 (US)**

• **Hoshida, Takeshi**
**Richardson, TX 75080 (US)**
• **Parker, Michael C.**
**Colchester,**
**Essex C03 4HG (GB)**

(74) Representative: **HOFFMANN EITLE**
**Patent- und Rechtsanwälte**
**Arabellastrasse 4**
**81925 München (DE)**

(56) References cited:
EP-A- 0 329 186      EP-A- 0 390 069
EP-A- 0 825 733      EP-A- 0 898 389
US-A- 3 752 992      US-A- 3 970 838
US-A- 4 732 447      US-A- 5 111 322

## Description

TECHNICAL FIELD OF THE INVENTION

The present invention relates generally to communication networks and, more particularly, to a system and method for multi-level phase modulated communication.

BACKGROUND OF THE INVENTION

Telecommunications systems, cable television systems, and data communication networks use optical networks to rapidly convey large amounts of information between remote points. In an optical network, information is conveyed in the form of optical signals through optical fibers. Optical fibers comprise thin strands of glass capable of transmitting the signals over long distances with very little loss. The optical signals have at least one characteristic modulated to encode audio, video, textual, real-time, non-real-time and/or other suitable data. Modulation may be based on phase shift keying (PSK), intensity shift keying (ISK), or other suitable methodologies.

In Quadrature Phase Shift Keying (QPSK) modulation, the phase of a carrier signal is modulated and takes on one of four possible values corresponding to a symbol set. In QPSK, the carrier signal may be split into two arms, the first of which, called the in-phase component, is phase modulated directly. The second arm, called the quadrature component, may be phase modulated after an additional ninety degree phase shift. The two arms are combined to produce one QPSK signal.

QPSK receivers use a Phase Locked Loop (PLL) with a local oscillator. Insufficient PLL response time leads to crosstalk between the in-phase and quadrature components of the QPSK signal, resulting in signal quality degradation.

In EP-A-0 898 389 there is disclosed an optical transmission system, optical transmitter and optical receiver used therefor for transmission of an angle-modulated signal. An angle modulating portion converts an inputted electrical signal into a predetermined angle-modulated signal. An optical modulating portion converts the angle-modulated signal outputted from the angle-modulating portion into an optical-modulated signal and sends the optical-modulated signal to an optical waveguide portion. An interference portion separates the optical-modulated signal transmitted through the optical waveguide portion into two optical signals having predetermined difference in propagation delay and then combines the optical signals. An optical/electrical converting portion subjects the combined optical signal to homodyne detection, to acquire a demodulated signal of the original electrical signal and output the electrical signal. The interference portion and the optical/electrical converting portion constitute a delayed detection system of an optical signal, so that the delayed detection system performs conversion processing of an optical signal into an electrical signal and angle demodulation processing simultaneously.

In US-A-5 111 322 there is discussed the single-wavelength bit-rate capacity increase of an ultra long distance soliton transmission system by using a combination of polarization and time-division multiplexing. More specifically, two streams of differently (preferably orthogonally) polarized solitons are interleaved (time division multiplexed) at a transmitter, and later separated at the receiver to recover both data streams.

In US-A-3 970 838 there is disclosed a homodyne receiver for use in wideband optical communications systems. The receiver utilizes dual channelization of the optical input signal in the manner of a Costas two-phase synchronous receiver. A beam-splitting/phase-splitting optical assembly is used to channelize the received and the local oscillator beams and insure the desired phase relationships.

In US-A-4 732 447 there is disclosed a receiver for modulated optical signals including a multiport optical fiber coupler arrangement to one input port of which the modulated optical signals are applied and to another input port of which a local oscillator optical signal of substantially the same optical frequency as the modulated optical signal is applied, whereby the output ports of the coupler give separate output signals that are differentially related to the optical frequency phase difference between the modulated input signal and the local oscillator signal, means for individually demodulating the output signals and means for summing the demodulated output signals.

SUMMARY OF THE INVENTION

According to one aspect of the present invention there is provided a method for modulating a signal for transmission, comprising: receiving a source signal; splitting the source signal into a first split signal and second split signal; modulating the first split signal based on a first dataset to generate a first modulated signal; shifting a phase of the second split signal to generate a phase-shifted second split signal; modulating the phase-shifted second split signal based on a second dataset to generate a modulated second signal; controlling the polarization of the modulated second signal; and combining the modulated first signal and the modulated second signal to generate a combined signal; wherein said source signal is directly modulated based on data.

According to another aspect of the present invention there is provided a method for receiving a signal, comprising: generating a polarized signal based on receiver-side feedback; compensating an ingress traffic signal for polarization mode dispersion; combining the compensated ingress traffic signal with the polarized signal to generate a combined signal; splitting the combined signal into a first split signal and second split signal; detecting the first split signal; and detecting the second split signal.

According to a further aspect of the present invention there is provided a A system for transmitting a signal, comprising: a means for providing a source signal; a means for splitting the source signal into a first split signal and second split signal; a means for modulating the first split signal based on a first dataset to generate a modulated first split signal; a means for shifting a phase of the second split signal to generate a phase-shifted second split signal; a means for modulating the phase-shifted second split signal based on a second dataset to generate a modulated second signal; a means for controlling the polarization of the modulated second signal to generate a polarized signal; and a means for combining the modulated first split signal and the polarized signal to generate a combined signal; wherein said source signal is directly modulated based on data.

According to yet another aspect of the present invention there is provided a system for receiving a signal comprising: a means for receiving a signal; a means for providing a local signal; a means for controlling a polarization of the local signal to generate an appropriately polarized local signal; a means for compensating polarization mode dispersion of the received signal; a means for combining the polarized local signal and the received signal; a means for splitting the combined signal into a first split signal and a second split signal; a means for detecting the first split signal; a means for detecting the second split signal; and a means for generating feedback to modify the local signal.

According to a still further aspect of the present invention there is provided an optical transmitter, comprising: a carrier signal generator, operable to generate an optical signal; an intensity modulator, optically coupled to the carrier signal generator and operable to directly modulate an intensity of the optical signal based on data to generate an intensity modulated signal; a first beam splitter, optically coupled to the intensity modulator and operable to receive and divide the intensity modulated signal into two separate signals; a first phase modulator, optically coupled to the first beam splitter and operable to receive a data stream and modulate a phase of an optical signal based on the data stream to generate a first modulated signal; a phase shifter, optically coupled to the first beam splitter and operable to shift a phase of an optical signal; a second phase modulator, optically coupled to the phase shifter and operable to receive a data stream and modulate a phase of an optical signal based on the data stream to generate a second modulated signal; a half wave plate, optically coupled to the second phase modulator and operable to receive the second modulated signal and generate a signal with a polarization state that is orthogonal to the polarization state of the first modulated signal to generate an orthogonal signal; a second polarization beam splitter, optically coupled to the first phase modulator and the half wave plate and operable to combine the first modulated signal with the orthogonal signal to generate a combined signal.

According to still another aspect of the present invention there is provided An optical receiver, comprising: a local oscillator optically coupled to a quarter wave plate and operable to generate an optical signal; the quarter wave plate optically coupled to a first beam splitter and operable to receive the optical signal, circularly polarize the optical signal to generate a circularly polarized signal, and transmit the polarized signal to the first beam splitter; a polarization mode dispersion compensator for compensating polarization mode dispersion of an optical traffic signal; the first beam splitter optically coupled to a second polarization beam splitter and operable to receive the optical traffic signal, combine the optical traffic signal with the circularly polarized signal to generate a combined signal, and transmit the combined signal to the second polarization beam splitter; the second polarization beam splitter optically coupled to a first photodiode and a second photodiode and operable to receive the combined signal, split the combined signal into a first split signal and a second split signal, and transmit the first split signal to the first photodiode and the second split signal to the second photodiode; the first photodiode coupled to a decision circuit and operable to receive the first split signal, generate a first data signal based on the first split signal, and transmit the first data signal to the decision circuit; the second photodiode coupled to a decision circuit and operable to receive the second split signal, generate a second data signal based on the second split signal, and transmit the second data signal to the decision circuit; the decision circuit coupled to a feedback control module and operable to determine a desired optical signal generated by the local oscillator generate a control signal based on the desired optical signal, and transmit the control signal to the feedback control module; the feedback control module coupled to the local oscillator and operable to generate an oscillator control signal based on the control signal; and the local oscillator operable to receive the oscillator control signal and modify the optical signal based on the oscillator control signal.

In accordance with the present invention, a system and method for multi-level phase modulated communication are provided which substantially eliminate or reduce disadvantages and problems associated with previous systems and methods.

A method for transmitting a signal includes providing a source signal and splitting the source signal into a first and second split signal. The first split signal is modulated based on a first dataset. The second split signal is phase shifted and modulated based on a second dataset. The polarization of the modulated second signal is rotated or otherwise controlled to be orthogonal with respect to the polarization of the modulated second signal and combined with the modulated first signal. The combined signal may also be modulated and transmitted.

In another embodiment, a method for receiving a signal includes receiving a signal and providing a local signal. The local signal is circularly polarized and combined with the received signal. The combined signal is split into a first and second split signal and the first and second split signals are detected. Feedback is generated to modify the local signal.

Embodiments of the invention provide various technical advantages. Technical advantages include providing a method for transmitting a signal, which includes polarization multiplexing of I and Q components in QPSK. The polarization multiplexing reduces crosstalk in the presence of phase errors. Another technical advantage includes taking advantage of polarization multiplexing of I and Q components at the receiver, thereby reducing crosstalk and simplifying the receiver design. An additional technical advantage includes providing a transmitter and receiver configuration for polarization multiplexed and intensity modulated QPSK. Still another technical advantage includes providing intensity modulation to a modified QPSK signal in order to suppress degradation caused by SPM/XPM+GVD in transmission over optical fiber.

Still another technical advantage includes the use of intensity modulation at the transmitter to improve non-linear tolerance of QPSK. Moreover, other technical advantages of the present invention will be readily apparent to one skilled in the art from the following figures, descriptions, and claims. Moreover, while specific advantages have been enumerated above, various embodiments may include all, some, or none of the enumerated advantages.

## BRIEF DESCRIPTION OF THE DRAWINGS

For a more complete understanding of the present invention and its advantages, reference is now made to the following description, taken in conjunction with the accompanying drawings, in which:

FIGURE 1 is a block diagram illustrating an optical communication system in accordance with one embodiment of the present invention;

FIGURES 2A-B are block diagrams illustrating the optical transmitter of FIGURE 1 in accordance with several embodiments of the present invention;

FIGURE 3 is a block diagram illustrating the optical transmitter of FIGURE 2A, implemented in a planar lightwave circuit, in accordance with one embodiment of the present invention;

FIGURE 4 is a block diagram illustrating the optical transmitter of FIGURE 2A, implemented with discrete elements, in accordance with one embodiment of the present invention;

FIGURE 5 is a block diagram illustrating the optical transmitter of FIGURE 2A, implemented with free space optics, in accordance with one embodiment of the present invention;

FIGURE 6 is a block diagram illustrating the optical receiver of FIGURE 1 in accordance with one embodiment of the present invention;

FIGURE 7 is a block diagram illustrating the optical receiver of FIGURE 6, implemented in a planar lightwave circuit, in accordance with one embodiment of the present invention;

FIGURE 8 is a block diagram illustrating the optical receiver of FIGURE 6, in accordance with one embodiment of the present invention;

FIGURE 9 is a flow diagram illustrating a method for transmitting a signal in accordance with one embodiment of the present invention; and

FIGURE 10 is a flow diagram illustrating a method for receiving a signal in accordance with one embodiment of the present invention.

## DETAILED DESCRIPTION OF THE INVENTION

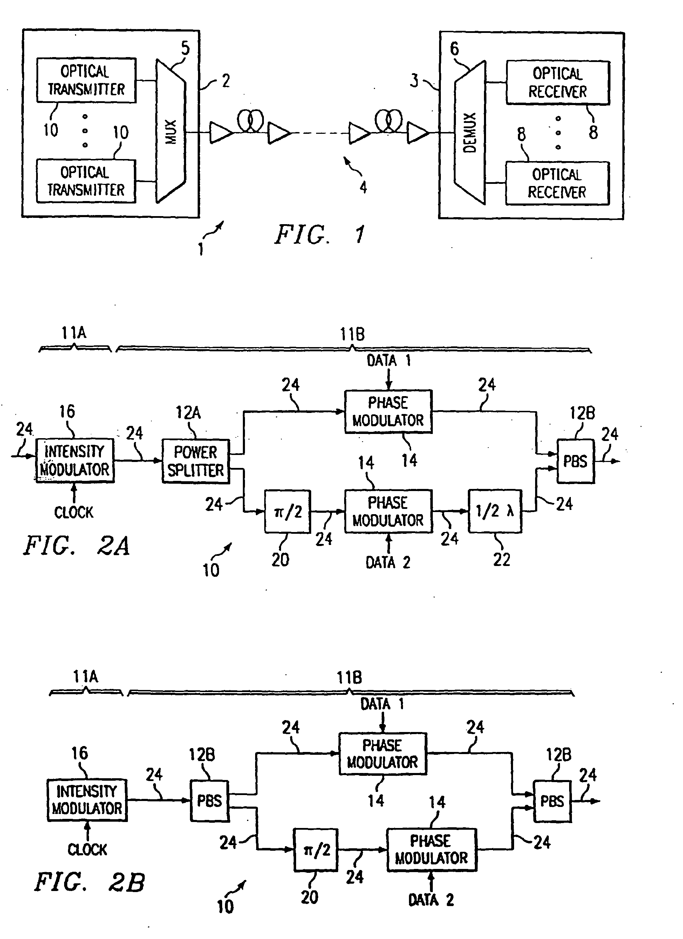

FIGURE 1 illustrates an optical communications system in accordance with one embodiment of the present invention. Optical communications system 1 includes a transmission module 2 coupled to a receiver module 3 via an optical link 4. Transmission module 2 generates optical signals based on data for transmission over optical link 4 to receiver module 3. Receiver module 3 receives the optical signals and extracts the data.

Transmission module 2 includes a multiplexer 5 and a plurality of optical transmitters 10. Optical transmitters 10 modulate a signal based on data to produce a modulated signal. In one embodiment, each optical transmitter 10 produces a modulated signal on a distinct wavelength. As used throughout, each means all of a particular subset. Multiplexer 5 receives the modulated signals generated by the optical transmitters 10 and combines them for transmission over optical link 4. In one embodiment, the signals are combined according to a Dense Wavelength Division Multiplexing (DWDM) technique. Once combined, the resultant optical signal is transmitted over optical link 4 to receiver module 3.

Optical link 4 includes one or more spans of optical fiber. The optical fiber may be constructed of glass, a liquid core in a plastic casing, or otherwise suitably constructed to transmit optical signals. One or more optical amplifiers may also be distributed along the one or more spans of optical fiber.

Receiver module 3 includes a demultiplexer 6 and a plurality of optical receivers 8. Demultiplexer 6 receives the combined optical signal over optical link 4 and extracts the original modulated signals used to create the combined optical signal. In one embodiment, the combined optical signal is a DWDM signal and is demultiplexed accordingly. Demultiplexer 6 transmits the extracted modulated signals to the optical receivers 8 on a one-to-one basis. The extracted modulated signals may also be distributed in a variety of ways, including, for example, distribution based on traffic volume or on an as available basis. Optical receivers 8 receive the extracted modulated signals and extract the data used by optical transmitters 10 to produce the modulated signals.

FIGURE 2A illustrates details of the optical transmitter 10 in accordance with one embodiment of the present invention. In this embodiment, optical transmitter 10 is a multi-stage modulator. The first stage 11A modulates a signal for transmission using intensity modulation. The second stage 11B modulates the first stage signal using a combination of Quadrature Phase Shift Keying (QPSK) with polarization multiplexing. Optical transmitter 10 may include other or different suitable stages. For example, optical transmitter 10 may instead modulate a signal using QPSK and then modulate the intensity of the QPSK signal. While the present invention is described in an optical communications system, it will be understood that other suitable systems may also be employed, such as microwave communication systems, for example.

Referring to FIGURE 2A, a first stage 11A includes intensity modulator 16. Intensity modulator 16 is operable to modulate the intensity of an optical signal based on data. In the illustrated embodiment, intensity modulator 16 modulates the intensity of an optical signal based on a clock signal. The clock signal may be a symbol synchronous sinusoidal clock signal, synchronized with a data signal. It will be understood that other suitable signals or data may be used to provide the data by which intensity modulator 16 modulates the intensity of an optical signal.

The second stage 11B includes a power splitter 12A, a polarization beam splitter 12B, a plurality of phase modulators 14, a phase shifter 20, a half-wave plate 22, and a plurality of optical links 24. Power splitter 12A is any device operable to receive a plurality of signals and combine or otherwise passively generate a combined signal based on the received signals and/or to receive a signal and to split the received signal into discrete signals or otherwise passively generate discrete signals based on the received signal. The discrete signals may be identical in form and/or process or may suitably differ. Polarization beam splitter 12B is any device operable to receive a plurality of signals and combine or otherwise passively generate a combined signal based on the received signals and their associated polarization and/or to receive a signal and to split the received signal into discrete signals or otherwise passively generate discrete signals of disparate polarization states based on the received signal. Phase modulator 14 is operable to modulate the phase of an optical signal based on data.

Phase shifter 20 is operable to shift a phase of an optical signal. Half wave plate 22 is operable to rotate the polarization of an optical signal by ninety degrees. Optical links 24 link the various components of optical transmitter 10 as shown in FIGURE 2A. In particular, an optical link 24 connects an intensity modulator 16 with a power splitter 12A. Optical links 24 connect power splitter 12A with a first phase modulator 14 and the phase shifter 20. Optical links 24 connect the first phase modulator 14 with a polarization beam splitter 12B. Optical links 24 connect the first phase shifter 20 with a second phase modulator 14 and the second phase modulator 14 with the half wave plate 22. Optical link 24 also connects the half wavelength plate 22 with the polarization beam splitter 12B. Each optical link 24 may be an optical fiber and may be formed with varying types of materials that affect the transport characteristics of light flows along optical link 24.

In operation, optical transmitter 10 receives a carrier signal, modulates the carrier signal intensity, splits the intensity modulated signal into two arms and modulates the phase of each arm to produce a combined quadrature phase shift keying (QPSK) signal resulting in intensity modulated quadrature phase shift keying (IM/QPSK). In QPSK modulation, the phase of the carrier signal is modulated and takes on values from the set [-45°, 45°, 135°, -135°] corresponding to the symbol set [10, 11, O1, 00], respectively.

The carrier signal may be provided by a continuous wave laser and may be mathematically expressed, for example, as A $\cos(2\pi f_c t)$, where A is amplitude, $f_c$ is the carrier frequency, and t is time.

The carrier signal is first intensity modulated by intensity modulator 16. In the illustrated embodiment, the carrier signal is modulated based on a twenty GHz symbol synchronous clock signal, synchronized with a data signal. Intensity modulator 16 transmits the intensity modulated signal to the power splitter 12A.

The intensity modulated signal enters the power splitter 12A where it is split into two signals, the first of which travels along an optical link 24 to the first phase modulator 14. Phase modulator 14 directly phase-modulates the signal based on a first data source at twenty Gb/s, the resulting signal called the in-phase component (I component). The in-phase component travels along optical link 24 to the polarization beam splitter 12B, in this case functioning as a combiner.

The second signal coming from power splitter 12A travels along optical link 24 to phase shifter 20. Phase shifter 20 shifts the phase of the carrier source signal by 90 degrees. In some embodiments, phase shifter 20 may be "invisible" - for example, a direct current (DC) voltage may be applied to the second phase modulator 14 to effect the phase shift. Alternatively, the phase may be shifted by manipulating the optical path length or by taking advantage of the electro-optic effect and/or nonlinearity, or other suitable methods.

After the carrier signal is phase shifted, the phase-shifted signal travels along optical link 24 to the second phase modulator 14, where the phase-shifted signal is directly phase-modulated by a second data source at 20 Gb/s, resulting in a signal called the quadrature component (Q component). The quadrature component travels along optical link 24 to half wave plate 22, where the signal polarization is rotated by ninety degrees, such that it is orthogonal to the polarization of the in-phase component generated by first phase modulator 14.

In a particular embodiment, where the carrier signal is launched in transverse electric (TE) polarization, half wave plate 22 converts it to transverse magnetic (TM) polarization. TE and TM polarization may be described by the following mathematical formulae:

$$TE = E_x \cos ({}^{TM}{}_c t) \, \wp + E_y \cos ({}^{TM}{}_c t + 2) \downarrow, \text{ where } E_y = 0$$

$$TM = E_x \cos ({}^{TM}{}_c t) \, \wp + E_y \cos ({}^{TM}{}_c t + 2) \downarrow, \text{ where } E_x = 0$$

where $E_x$ is the amplitude of polarization in the x-direction, $E_y$ is the amplitude of the polarization in the y-direction, ${}^{TM}{}_c$ is the carrier frequency; t is time; $\wp$ is the unit vector in the direction of the x-axis; $\downarrow$ is the unit vector in the direction of the y-axis; and 2 is the arbitrary phase difference. The resultant signals, that is, the I and Q components, are therefore orthogonal to each other, with the I component at transverse electric (TE) polarization and the Q component at transverse magnetic (TM) polarization.

The in-phase and quadrature components are combined at polarization beam splitter 12B. The combined signal may be described mathematically, for example, as $E_x \cos ({}^{TM}{}_c t + 2_1(t)) \, \wp + E_y \sin ({}^{TM}{}_c t + 2_2(t)) \downarrow$, where $2_1(t)$ is a first data stream in phase modulated format and $2_2(t)$ is a second data stream in phase modulated format.

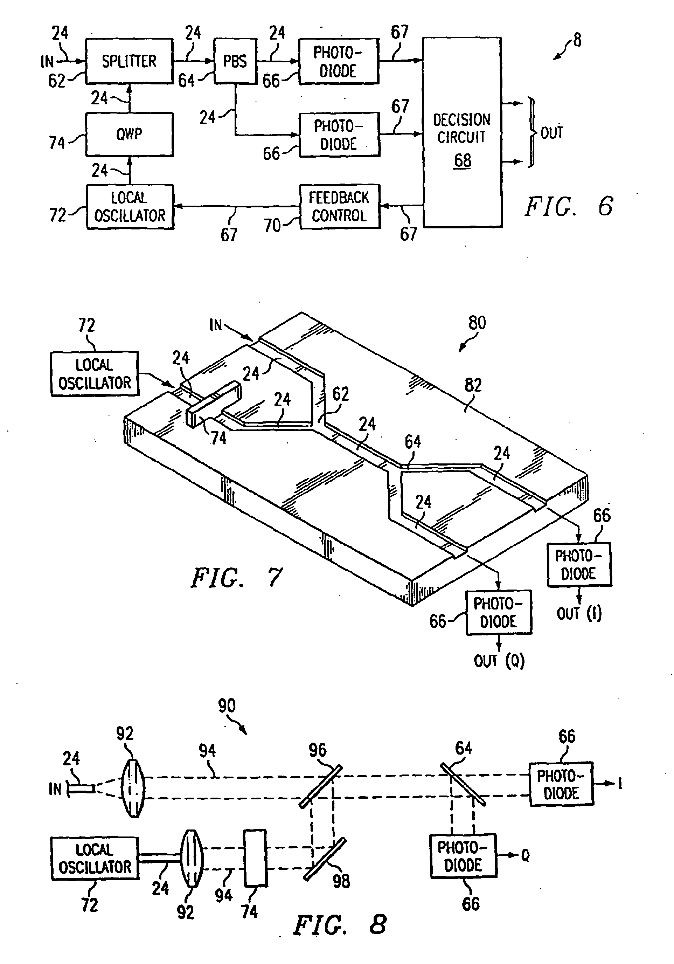

In the illustrated embodiment, the resultant intensity modulated QPSK signal is then sent for transmission along optical link 24. In an exemplary embodiment, the resultant transmission rate is 40 Gb/s symbol synchronous intensity modulated QPSK. As described above, the first stage is intensity modulation with a 20 GHz symbol synchronous sinusoidal clock signal. The second stage is QPSK modulation with polarization multiplexing. Thus, the intensity is reduced when there is a phase discontinuity in the signal. The advantage of intensity modulation is to suppress the degradation caused by SPM/XPM+GVD in transmission over fiber. As will be shown below, in connection with FIGURES 6, 7, and 8, the advantage of polarization multiplexing is to reduce the crosstalk between the in-phase and quadrature components.

FIGURE 2B illustrates an optical transmitter 10 in accordance with another embodiment of the present invention. Like the optical transmitter of FIGURE 2A, optical transmitter 10 includes a first stage 11A and second stage 11B. First stage 11A modulates an optical signal for transmission using intensity modulation. Second stage 11B modulates the first stage signal using a combination of QPSK with polarization multiplexing.

First stage 11A includes an intensity modulator 16 operable to modulate the intensity of an optical signal based on a clock signal. Second stage 11B includes a first and second polarization beam splitter 12B, a first and second phase modulator 14, phase shifter 20, and a plurality of optical links 24.

In operation, optical transmitter 10 functions in a manner substantially similar to the optical transmitter of FIGURE 2A. However, the use of a first polarization beam splitter 12B renders a half wave plate unnecessary. This configuration requires the polarization of the optical signal entering first polarization beam splitter 12B to be linearly polarized at an angle of forty-five degrees relative to an axis of the first polarization beam splitter 12B.

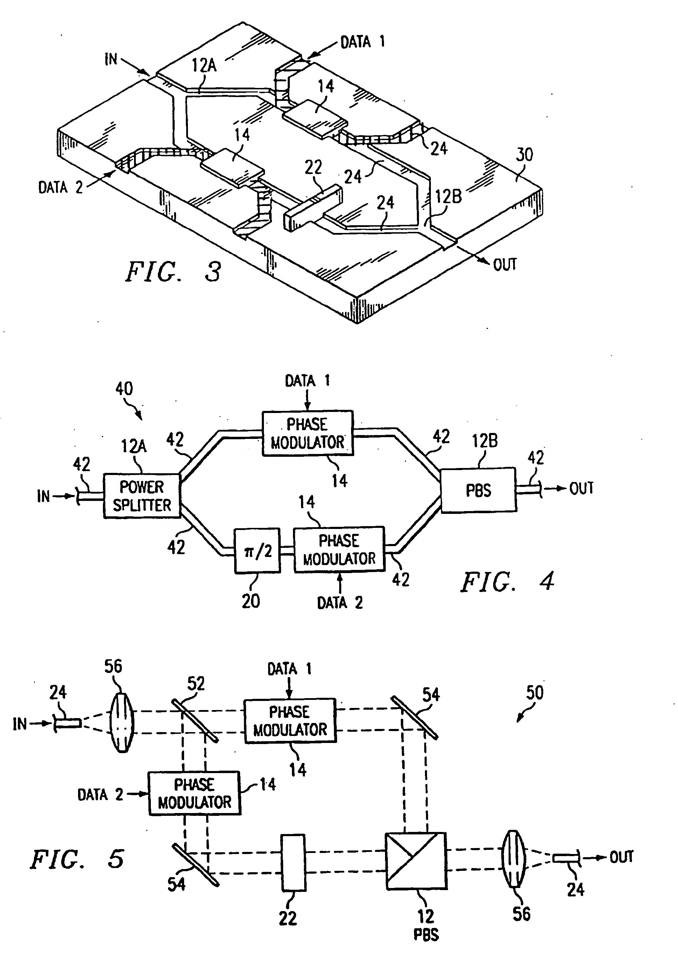

FIGURE 3 illustrates an implementation of the system of FIGURE 2A, in particular, a planar light wave circuit. Planar light wave circuit 30 includes a power splitter 12A, a polarization beam splitter 12B, a plurality of phase modulators 14, a half wavelength plate 22, and a plurality of optical links 24 interconnecting the components.

In operation, the carrier signal enters an ingress section of planar light wave circuit 30, where the signal is split into two branches by the power splitter 12A. The first branch proceeds to a first phase modulator 14 wherein the carrier signal is directly phase modulated according to a first dataset received along the electrical wave guide (hatched) to generate a first modulated signal (the I component). The second branch of the split signal travels to the second phase modulator 14, which shifts the phase of the carrier signal and modulates the phase shifted signal based on a second dataset received along the electrical wave guide (hatched) to generate a second modulated signal (the Q component). After modulation based on the second dataset, the modulated signal travels along optical link 24 to half wavelength plate 22, where the polarization of the Q component is rotated to be orthogonal to the polarization of the I component. The in-phase and quadrature components travel along optical links 24 to the polarization beam splitter 12B, where the signals are combined and travel out of planar light wave circuit 30 through an egress section. From planar light wave circuit 30, the resultant QPSK signal may then be intensity modulated in a similar fashion to that shown in accordance with FIGURE 2A (not shown here). Alternatively, the carrier signal may be intensity modulated before it enters planar light wave circuit 30. Planar light wave circuit 30 may be constructed of various materials conducive to transmission of optical signals or light through the material, such as, for example, lithium niobate or silica.

FIGURE 4 illustrates an embodiment of the system of FIGURE 2A as discrete elements connected by optical fiber. Optical transmitter 40 includes polarization maintaining fiber (PMF) 42 connecting a splitter 12A with a pair of phase modulators 14 and a phase shifter 20. PMF 42 further connects the phase modulators 14 to polarization beam splitter 12B. In operation, a carrier signal enters the splitter 12A, where it is split into two arms, each of which travel along PMF 42 to the first and second phase modulators. In the second arm, the signal passes through the phase shifter 20 before the phase modulator. The first phase modulator 14 modulates a phase of the signal based on a first dataset, to generate a first modulated signal (the I component). Phase shifter 20 shifts the phase of the optical signal on the second arm. Second phase modulator 14 modulates the phase of the second arm of the carrier signal based on a second dataset, to generate a second modulated signal (the Q component). The polarization of the Q component is rotated to be orthogonal to the polarization of the I component. The quadrature (Q) component proceeds along PMF 42 to the polarization beam splitter 12B. The in-phase and quadrature components are combined at polarization beam splitter 12B where the combined signal may be then passed to an intensity modulator for intensity modulation and further transmission.

FIGURE 5 illustrates the system of FIGURE 2A, in a free space optics environment in accordance with yet another embodiment of the present invention. Optical transmitter 50 includes optical links 24, two phase modulators 14, polarization beam splitter 12, half wave plate 22, half mirror 52, mirrors 54, and lenses 56. In operation, the carrier signal passes through optical link 24 and shines onto lens 56, which concentrates the light onto half mirror 52. Half mirror 52 is operable to split the light into two discrete beams, each of which passes to one of the phase modulators 14. The first phase modulator 14 modulates the phase of the light beam based on a first dataset and the second phase modulator 14 shifts the phase of the signal and modulates the phase-shifted beam of light based on a second dataset. Both beams leave their respect phase modulators 14 and travel to a mirror 54. The light beam of phase modulated light from the first phase modulator 14 reflects from the first mirror 54 directly to the polarization beam splitter 12 (the in-phase (I) component). The second phase modulated light reflects from the second mirror 54 and passes through half wave plate 22, where the light is polarized to be orthogonal to the I component. The resultant light beam (the Q component) passes from half wave plate 22 to polarization beam splitter 12, where it is combined with the I component. The combined light beam shines on a second lens 56, where it is concentrated on an input side of optical link 24 for further transmission. A power combiner may be used in place of the polarization beam splitter 12. In addition, in another embodiment, a polarization beam splitter 12 may be used in place of half mirror 52 and the half wave plate 22 omitted. In this embodiment, the signal is linearly polarized at 45 degrees relative to the axis of the polarization beam splitter.

FIGURE 6 illustrates details of an the optical receiver 8 of FIGURE 1, in accordance with one embodiment of the present invention. In this embodiment, optical receiver 8 receives and processes different types of signals. Optical receiver 8 includes a plurality of optical links 24, a first splitter 62, a polarization beam splitter 64, a plurality of photodiodes 66, and electrical links 67. Optical receiver 8 also includes a decision circuit 68, a feedback control 70, a local oscillator 72, and a quarter wave plate 74. First splitter 62 is operable to receive an optical signal at an ingress section from optical link 24 and to combine that signal with a local oscillator signal received from the optical link 24 connecting first splitter 62 to quarter wave plate 74. First splitter 62 is operable to combine these two signals and transmit them along optical link 24 to polarization beam splitter 64. It will be understood that the first splitter 62 may be any optical coupler operable to combine the received signal from the in branch of optical link 24 and the signal received from quarter wave plate 74. Thus, splitter 62 may be a half mirror, a 50-50 path splitter/combiner, a fusion fiber coupler, a three decibel coupler, or any other device operable to combine the two signals and produce a single output in the most efficient way.

Polarization beam splitter 64 is operable to split the signal received from first splitter 62 into discreet signals or otherwise passively generate discreet signals based on the received signal. Polarization beam splitter 64 is operable to split the signal received from first splitter 62 into its transverse electric (TE) and transverse magnetic (TM) components. Thus, in this embodiment, any phase error in the local oscillator 72 will only result in signal attenuation, not cross-talk. Thus, the polarization beam splitter 64 is operable to split the received signal into its I and Q components by differentiating between the different polarizations associated with each component. That is, transverse electric (TE) for the in-phase component and transverse magnetic (TM) for the quadrature component. Each component is received by a photodiode 66 which, as mentioned below, converts the signals into an electrical signal which is then processed by decision circuit 68. The split signals from polarization beam splitter 64 travel along optical links 24 to photodiodes 66.

Photodiodes 66 are operable to convert the optical signals received from the polarization beam splitter 64 into electrical signals, which are then transmitted along electrical links 67 to decision circuit 68. Decision circuit 68 then retrieves the various components of the optical signals and converts them into the intended data streams.

Decision circuit 68 is connected to a feedback control 70 along an electrical link 67. Feedback control 70 is operable to modify the output of local oscillator 72 through a control link via electrical link 67, based on information received from decision circuit 68. Feedback control 70 operates in a fashion similar to a phase lock loop (PLL), and is used to minimize phase noise. Local oscillator 72 is operable to provide an optical output, in a similar fashion to the carrier source of FIGURE 2. The local oscillator signal travels along optical link 24 to quarter wave plate 74. Quarter wave plate 74 is operable to transform a linearly polarized signal received from local oscillator 72 into circular polarization and to transmit that circularly polarized signal along optical link 24 for combination with the input signal at first splitter 62.

In this embodiment it is assumed that the received light at first splitter 62 has already been aligned with the I component of the signal, that is, the received signal is in transverse electric (TE) polarization. This may be performed by, for example, an automatic polarization controller (APC) device, or other suitable devices. The signal received by first splitter 62 may also be filtered with a polarization mode dispersion compensator (PMDC) device along with the automatic polarization controller (APC). It will also be understood by those skilled in the art that where the local oscillator 72 emits circularly polarized light, there is no need for the quarter wave plate 74.

FIGURE 7 illustrates the optical receiver of FIGURE 6, as implemented in a planar light wave circuit, in accordance with one embodiment of the present invention. Optical receiver 80 includes planar light wave medium 82, a plurality of optical links 24, a first splitter 62, a polarization beam splitter 64, two or more photodiodes 66, a quarter wave plate 74, and a local oscillator 72. Planar light wave medium 82 may comprise any suitable medium operable to propagate light. Planar light wave medium 82 may comprise, for example, lithium niobate, silica and the like.

In operation, an optical signal is received at the in side of optical receiver 80 and travels along optical link 24 where it is combined with a signal received from local oscillator 72 at first splitter 62. Local oscillator 72, as described above, in conjunction with FIGURE 6, produces a signal that travels along an optical link 24 to a quarter wave plate 74, where the signal is circularly polarized. The circularly polarized signal is combined with the received signal at first splitter 62. The combined signal passes along an optical link 24 to the polarization beam splitter 64 where the signal is split into the I and Q components. The I and Q optical signals are then transmitted to a photodiode 66 where they are converted into electrical signals for processing.

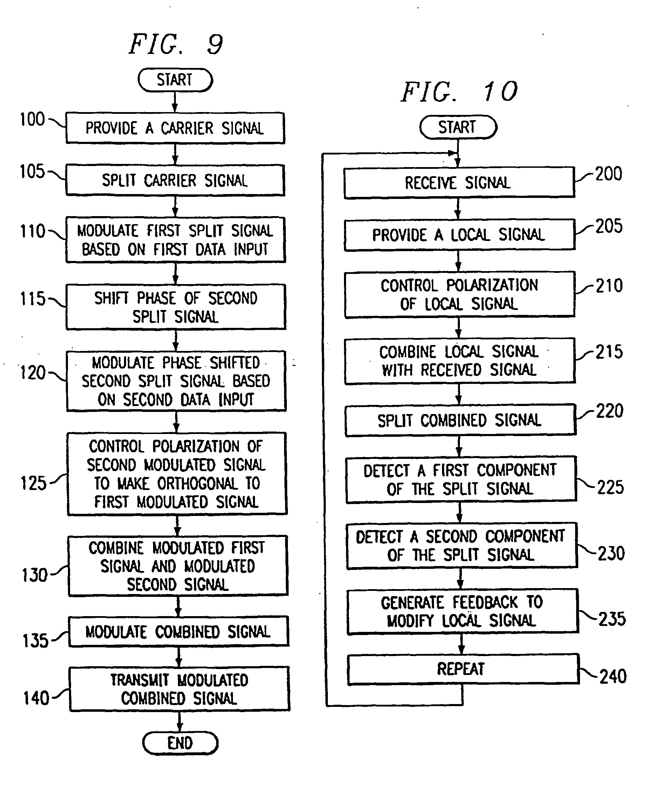

FIGURE 8 illustrates the optical receiver of FIGURE 6, as implemented in a free space optics environment, in accordance with one embodiment of the present invention. Optical receiver 90 includes an optical link 24, lenses 92, a plurality of light beams 94, a half mirror 96, a polarization beam splitter 64, a mirror 98, two or more photodiodes 66, a local oscillator 72, and a quarter wave plate 74. In operation, an optical signal is received at the in node at optical link 24, where the optical signal is received on a lens 92, which converts the optical signal into a light beam 94. Light beam 94 travels to half mirror 96 where it is combined with a signal received and reflected off of mirror 98. Local oscillator 72 generates a carrier signal along another optical link 24, which travels to a second lens 92 converting the signal into a light beam 94. The light beam then passes through a quarter wave plate 74, which, as described above, ensures that the light is circularly polarized. The circularly polarized light reflects off of mirror 98 to half mirror 96, where it is combined with the light beam generated by lens 92. The combined light passes to a polarization beam splitter 64 where the light is split into I and Q components and shines onto two or more photodiodes 66. As described above, photodiodes 66 are operable to convert the received light of the I and Q components of the signal from an optical to an electrical signal for further processing. Mirror 98 can be eliminated by locating local oscillator 72, lens 92, light beam 94, and quarter wave plate 74 in a vertical configuration. Further details of the present invention will become apparent in connection with the methods described in FIGURES 9 and 10.

FIGURE 9 is a flow diagram illustrating a method for transmitting a signal in accordance with one embodiment of the present invention. In this embodiment, intensity modulation independent of polarization state of the signal is performed at the second stage, with phase modulation being performed at the first stage.

The process begins at step 100 wherein a carrier signal is provided. As described above, this step may be performed by a local oscillator or continuous wave laser, or other means suitable to produce a carrier signal. Next, at step 105, the carrier signal is split into two discreet arms. As described above, this step may be, for example, performed by the beam splitter 12A of FIGURE 2A, or, for circularly polarized light by a polarization beam splitter.

At step 110, the first split signal is modulated based on a first data input. This step may be performed by the first phase modulator 14 of FIGURE 2A. Next, at step 115, the phase of the second split signal split in step 105 above is shifted by $\pi/2$ radians. As described above, this may be performed by the phase shifter 20 of FIGURE 2A. Next, at step 120, the phase shifted second split signal is modulated based on a second data input. This step may be performed by the second phase modulator 14 of FIGURE 2A.

Next, at step 125, the polarization of the second modulated signal is made orthogonal to polarization of the first modulated signal. This step may be performed by the half wave plate 22 of FIGURE 2A, or otherwise suitably polarized. Next, at step 130, the modulated first signal and the orthogonally polarized second signal are combined. This step may be performed by the polarization beam splitter 12B of FIGURE 2A or a splitter. At step 135, the combined signal is modulated. This step may be performed by intensity modulator 16 in an embodiment in which it is the second stage and may be modulated based on a clock signal. Next, at step 140, the modulated combined signal is transmitted and the process ends.

FIGURE 10 is a flow diagram illustrating a method for receiving and processing a signal in accordance with another embodiment of the present invention. The process begins at step 200 wherein an intensity modulated QPSK signal is received. At step 205 a local signal is provided. This step may be performed by, for example, local oscillator 72 of FIGURE 6. At step 210 the local signal is transformed to a circular polarization. As described above, this step may be performed by the quarter wave plate 74 of FIGURE 6.

At step 215, the polarized local signal is combined with the received signal. This step may be performed by the first splitter 62 of FIGURE 6. At step 220, the combined signal is then split into two discreet signals. This step may be performed by the polarization beam splitter 64 of FIGURE 6.

At step 225, a first component of the split signal is detected. This may be either the I or Q components of the received signal, and may be performed by photodiode 66 of FIGURES 6, 7, and 8. At step 230, a second component of the split signal is detected, the other of the two signals. That is, if the I component is detected at step 225, then the Q component is detected at step 230. As with step 225, this step may be performed by photodiode 66 of FIGURES 6, 7, and 8.

At step 235, feedback is generated to modify the local signal in order to provide a phase locked look (PLL) for the receiver. This step may be performed by decision circuit 68 and feedback control 70 of FIGURE 6. At step 240, the process repeats, wherein a signal is received (Step 200).

Although the methods of FIGURES 9 and 10 have been shown with specific steps in a specific order, it will be understood that the steps may be performed in a different order as appropriate, and other steps may be added or omitted as appropriate in keeping with the spirit of the present invention.

Although the present invention has been described with several embodiments, various changes and modifications may be suggested to one skilled in the art. It is intended that the present invention encompass its changes and modifications as fall within the scope of the appended claims.

**Claims**

1. A method for modulating an optical signal for transmission, comprising:

   receiving a source signal;
   splitting the source signal into a first split signal and second split signal;
   modulating the first split signal based on a first dataset to generate a first modulated signal;
   shifting a phase of the second split signal to generate a phase-shifted second split signal;
   modulating the phase-shifted second split signal based on a second dataset to generate a modulated second signal;
   controlling the polarization of the modulated second signal; and
   combining the modulated first signal and the modulated second signal to generate a combined signal;

   wherein said source signal is modulated based on data.

2. The method of Claim 1, wherein the polarization of the second signal is controlled to be orthogonal to the polarization of the modulated first signal.

3. The method of Claim 1, wherein the phase-shift is ninety degrees.

4. The method of Claim 1, wherein immediately prior to combination, the polarization of the modulated first signal is transverse electric (TE) polarization, and the polarization of the polarized second signal is transverse magnetic (TM) polarization.

5. The method of Claim 1, wherein the modulation is by phase modulation.

6. The method of Claim 1, further comprising modulating the source signal.

7. The method of Claim 6, wherein the source signal is modulated by intensity modulation.

8. The method of Claim 7, wherein the intensity modulation is periodic.

9. The method of Claim 7, wherein the intensity modulation is by a clock signal whose frequency and phase are synchronized with a data signal.

10. The method of Claim 1, wherein the signal is optical.

**11.** The method of Claim 1, further comprising modulating the combined signal.

**12.** A method for receiving an optical signal, comprising:

generating a polarized signal based on receiver-side feedback;
compensating an ingress traffic signal for polarization mode dispersion;
combining the compensated ingress traffic signal with the polarized signal to generate a combined signal;
splitting the combined signal into a first split signal and second split signal;
detecting the first split signal; and
detecting the second split signal.

**13.** The method of Claim 12, wherein the polarization is circular.

**14.** The method of Claim 12, wherein the first split signal comprises a first component of the received signal.

**15.** The method of Claim 12, wherein the second split signal comprises a second component of the received signal.

**16.** The method of Claim 12, wherein the ingress traffic signal is optical.

**17.** The method of Claim 12, wherein the combined signal is split by a polarization beam splitter (PBS).

**18.** The method of Claim 17, wherein the polarization of a first component of the ingress traffic signal is aligned to an axis of the polarization beam splitter.

**19.** A system for transmitting an optical signal, comprising:

a means for providing a source signal;
a means for splitting the source signal into a first split signal and second split signal;
a means for modulating the first split signal based on a first dataset to generate a modulated first split signal;
a means for shifting a phase of the second split signal to generate a phase-shifted second split signal;
a means for modulating the phase-shifted second split signal based on a second dataset to generate a modulated second signal;
a means for controlling the polarization of the modulated second signal to generate a polarized signal; and
a means for combining the modulated first split signal and the polarized signal to generate a combined signal;

wherein said source signal is modulated based on data.

**20.** The system of Claim 19, wherein the polarization of the modulated second signal is orthogonal to the polarization of the modulated first signal.

**21.** The system of Claim 19, wherein the phase shift is ninety degrees;

**22.** The system of Claim 19, wherein immediately prior to combination, the polarization of the modulated first signal is transverse electric (TE) polarization, and the polarization of the polarized second signal is transverse magnetic (TM) polarization.

**23.** The system of Claim 19, wherein the modulation is by phase modulation.

**24.** The system of Claim 19, further comprising a means for modulating the source signal.

**25.** The system of Claim 24, wherein the source signal is modulated hy intensity modulation.

**26.** The system of Claim 25, wherein the intensity modulation is periodic.

**27.** The system of Claim 25 wherein the intensity modulation is by a clock signal whose frequency and phase are synchronized with a data signal.

**28.** The system of Claim 27, wherein the clock signal is at a symbol rate.

**29.** The system of Claim 19, wherein the signal is optical.

**30.** The system of Claim 19, wherein the source signal means is a continuous wave laser.

**31.** The system of Claim 19, wherein the source signal is split by a polarization beam splitter; and wherein the source signal is circularly polarized.

**32.** The system of Claim 19, wherein the source signal is split by a half mirror.

**33.** The system of Claim 19, wherein the source signal is split by a three decibel splitter.

**34.** The system of Claim 19, wherein the phase shift means is by applying direct current (DC) voltage to the modulator.

**35.** The system of Claim 19, wherein the means for controlling polarization is a half-wave plate.

**36.** A system for receiving an optical signal comprising:

a means for receiving a signal;
a means for providing a local signal;
a means for controlling a polarization of the local signal to generate an appropriately polarized local signal;
a means for compensating polarization mode dispersion of the received signal;
a means for combining the polarized local signal and the received signal;
a means for splitting the combined signal into a first split signal and a second split signal;
a means for detecting the first split signal;
a means for detecting the second split signal; and
a means for generating feedback to modify the local signal.

**37.** The system of Claim 36, wherein the signal is received by an automatic polarization controller.

**38.** The system of Claim 36, wherein the appropriate polarization of the local signal is circular.

**39.** The system of Claim 36, wherein the first split signal comprises a first component of the received signal.

**40.** The system of Claim 36, wherein the second split signal comprises an orthogonally polarized second component of the received signal.

**41.** The system of Claim 36, wherein the signal is optical.

**42.** The system of Claim 36, wherein the local signal is provided by a continuous wave laser.

**43.** The system of Claim 36, wherein the local signal means yields circularly polarized light.

**44.** The system of Claim 36, wherein the means to control polarization is a quarter wave plate.

**45.** The system of Claim 36, wherein the combiner means is a 3 decibel splitter.

**46.** The system of Claim 36, wherein the combiner means is a half mirror.

**47.** The system of Claim 36, wherein the splitting means is a polarization beam splitter; and a first component of the signal is aligned to an axis of the polarization beam splitter.

**48.** The system of Claim 36, wherein the detecting means is a photodiode.

**49.** An optical transmitter, comprising:

a carrier signal generator, operable to generate an optical signal;
an intensity modulator, optically coupled to the carrier signal generator and operable to modulate an intensity of the optical signal based on data to generate an intensity modulated signal;

a first beam splitter, optically coupled to the intensity modulator and operable to receive and divide the intensity modulated signal into two separate signals;

a first phase modulator, optically coupled to the first beam splitter and operable to receive a data stream and modulate a phase of an optical signal based on the data stream to generate a first modulated signal;

a phase shifter, optically coupled to the first beam splitter and operable to shift a phase of an optical signal;

a second phase modulator, optically coupled to the phase shifter and operable to receive a data stream and modulate a phase of an optical signal based on the data stream to generate a second modulated signal;

a half wave plate, optically coupled to the second phase modulator and operable to receive the second modulated signal and generate a signal with a polarization state that is orthogonal to the polarization state of the first modulated signal to generate an orthogonal signal;

a second polarization beam splitter, optically coupled to the first phase modulator and the half wave plate and operable to combine the first modulated signal with the orthogonal signal to generate a combined signal.

**50.** An optical receiver, comprising:

a local oscillator optically coupled to a quarter wave plate and operable to generate an optical signal;

the quarter wave plate optically coupled to a first beam splitter and operable to receive the optical signal, circularly polarize the optical signal to generate a circularly polarized signal, and transmit the polarized signal to the first beam splitter;

a polarization mode dispersion compensator for compensating polarization mode dispersion of an optical traffic signal;

the first beam splitter optically coupled to a second polarization beam splitter and operable to receive the optical traffic signal, combine the optical traffic signal with the circularly polarized signal to generate a combined signal, and transmit the combined signal to the second polarization beam splitter;

the second polarization beam splitter optically coupled to a first photodiode and a second photodiode and operable to receive the combined signal, split the combined signal into a first split signal and a second split signal, and transmit the first split signal to the first photodiode and the second split signal to the second photodiode;

the first photodiode coupled to a decision circuit and operable to receive the first split signal, generate a first data signal based on the first split signal, and transmit the first data signal to the decision circuit;

the second photodiode coupled to a decision circuit and operable to receive the second split signal, generate a second data signal based on the second split signal, and transmit the second data signal to the decision circuit;

the decision circuit coupled to a feedback control module and operable to determine a desired optical signal generated by the local oscillator generate a control signal based on the desired optical signal, and transmit the control signal to the feedback control module;

the feedback control module coupled to the local oscillator and operable to generate an oscillator control signal based on the control signal; and

the local oscillator operable to receive the oscillator control signal and modify the optical signal based on the oscillator control signal.

## Patentansprüche

**1.** Ein Verfahren zum Modulieren eines optischen Signals für eine Übertragung, umfassend:

Empfangen eines Quellensignals;

Splitten des Quellensignals in ein erstes Splittsignal und ein zweites Splittsignal;

Modulieren des ersten Splittsignals basierend auf einer ersten Datenmenge, um ein erstes moduliertes Signal zu generieren;

Verschieben einer Phase des zweiten Splittsignals, um ein phasenverschobenes zweites Splittsignal zu generieren;

Modulieren des phasenverschobenen zweiten Splittsignals basierend auf einer zweiten Menge, um ein moduliertes zweites Signal zu generieren;

Steuern der Polarisation des modulierten zweiten Signals; und

Kombinieren des modulierten ersten Signals und des modulierten zweiten Signals, um ein kombiniertes Signal zu generieren;

wobei das Quellensignal basierend auf Daten moduliert wird.

**2.** Das Verfahren nach Anspruch 1, wobei die Polarisation des zweiten Signals gesteuert wird, zu der Polarisation des modulierten ersten Signals orthogonal zu sein.

**3.** Das Verfahren nach Anspruch 1, wobei die Phasenverschiebung neunzig Grad ist.

**4.** Das Verfahren nach Anspruch 1, wobei unmittelbar vor Kombination die Polarisation des modulierten ersten Signals querlaufende elektrische (TE, transverse electrical) Polarisation ist, und die Polarisation des polarisierten zweiten Signals querlaufende magnetische (TM) Polarisation ist.

**5.** Das Verfahren nach Anspruch 1, wobei die Modulation durch Phasenmodulation ist.

**6.** Das Verfahren nach Anspruch 1, ferner umfassend Modulieren des Quellensignals.

**7.** Das Verfahren nach Anspruch 6, wobei das Quellensignal durch Intensitätsmodulation moduliert wird.

**8.** Das Verfahren nach Anspruch 7, wobei die Intensitätsmodulation periodisch ist.

**9.** Das Verfahren nach Anspruch 7, wobei die Identitätsmodulation nach einem Taktsignal geschieht, dessen Frequenz und Phase mit einem Datensignal synchronisiert sind.

**10.** Das Verfahren nach Anspruch 1, wobei das Signal optisch ist.

**11.** Das Verfahren nach Anspruch 1, ferner umfassend Modulieren des kombinierten Signals.

**12.** Ein Verfahren zum Empfangen eines optischen Signals, umfassend:

Generieren eines polarisierten Signals basierend auf einer empfängerseitigen Rückkopplung;
Kompensieren eines Eingangsverkehrssignals für Polarisationsmodusdispersion;
Kombinieren des kompensierten Eingangsverkehrssignals mit dem polarisierten Signal, um ein kombiniertes Signal zu generieren;
Splitten des kombinierten Signals in ein erstes Splittsignal und ein zweites Splittsignal;
Erfassen des ersten Splittsignals; und
Erfassen des zweiten Splittsignals.

**13.** Das Verfahren nach Anspruch 12, wobei die Polarisation zyklisch ist.

**14.** Das Verfahren nach Anspruch 12, wobei das erste Splittsignal eine erste Komponente des empfangenen Signals umfasst.

**15.** Das Verfahren nach Anspruch 12, wobei das zweite Splittsignal eine zweite Komponente des empfangenen Signals umfasst.

**16.** Das Verfahren nach Anspruch 12, wobei das Eingangsverkehrssignal optisch ist.

**17.** Das Verfahren nach Anspruch 12, wobei das kombinierte Signal durch einen Polarisationsstrahlensplitter (PBS) gesplittet wird.

**18.** Das Verfahren nach Anspruch 17, wobei die Polarisation einer ersten Komponente des Eingangsverkehrssignals mit einer Achse des Polarisationsstrahlensplitters ausgerichtet ist.

**19.** Ein System zum Übertragen eines optischen Signals, umfassend:

ein Mittel zum Bereitstellen eines Quellensignals;
ein Mittel zum Splitten des Quellensignals in ein erstes Splittsignal und ein zweites Splittsignal;
ein Mittel zum Modulieren des ersten Splittsignals basierend auf einer ersten Datenmenge, um ein moduliertes erstes Splittsignal zu generieren;
ein Mittel zum Verschieben einer Phase des zweiten Splittsignals, um ein phasenverschobenes zweites Splittsignal zu generieren;

ein Mittel zum Modulieren des phasenverschobenen zweiten Splittsignals basierend auf einer zweiten Datenmenge, um ein moduliertes zweites Signal zu generieren;

ein Mittel zum Steuern der Polarisation des modulierten zweiten Signals, um ein polarisiertes Signal zu generieren; und

ein Mittel zum Kombinieren des modulierten ersten Splittsignals und des polarisierten Signals, um ein kombiniertes Signal zu generieren;

wobei das Quellensignal basierend auf Daten moduliert wird.

20. Das System nach Anspruch 19, wobei die Polarisation des modulierten zweiten Signals zu der Polarisation des modulierten ersten Signals orthogonal ist.

21. Das System nach Anspruch 19, wobei die Phasenverschiebung neunzig Grad ist.

22. Das System nach Anspruch 19, wobei unmittelbar vor Kombination die Polarisation des modulierten ersten Signals querlaufende elektrische (TE) Polarisation ist, und die Polarisation des polarisierten zweiten Signals querlaufende magnetische (TM) Polarisation ist.

23. Das System nach Anspruch 19, wobei die Modulation durch Phasenmodulation ist.

24. Das System nach Anspruch 19, ferner umfassend ein Mittel zum Modulieren des Quellensignals.

25. Das System nach Anspruch 24, wobei das Quellensignal durch Intensitätsmodulation moduliert wird.

26. Das System nach Anspruch 25, wobei die Intensitätsmodulation periodisch ist.

27. Das System nach Anspruch 25, wobei die Intensitätsmodulation nach einem Taktsignal geschieht, dessen Frequenz und Phase mit einem Datensignal synchronisiert sind.

28. Das System nach Anspruch 27, wobei das Taktsignal in einer Symbolrate ist.

29. Das System nach Anspruch 19, wobei das Signal optisch ist.

30. Das System nach Anspruch 19, wobei das Quellensignalmittel ein Dauerstrichlaser ist.

31. Das System nach Anspruch 19, wobei das Quellensignal durch einen Polarisationsstrahlensplitter gesplittet wird; und wobei das Quellensignal zyklisch polarisiert wird.

32. Das System nach Anspruch 19, wobei das Quellensignal durch einen Halbspiegel gesplittet wird.

33. Das System nach Anspruch 19, wobei das Quellensignal durch einen Drei-Dezibel-Splitter gesplittet wird.

34. Das System nach Anspruch 19, wobei das Phasenverschiebungsmittel durch Anlegen einer Gleichspannung (GS) an den Modulator ist.

35. Das System nach Anspruch 19, wobei das Mittel zum Steuern von Polarisation eine Halbwellenplatte ist.

36. Ein System zum Empfangen eines optischen Signals, umfassend:

ein Mittel zum Empfangen eines Signals;

ein Mittel zum Bereitstellen eines lokalen Signals;

ein Mittel zum Steuern einer Polarisation des lokalen Signals, um ein geeignet polarisiertes lokales Signal zu generieren;

ein Mittel zum Kompensieren von Polarisationsmodusdispersion des empfangenen Signals;

ein Mittel zum Kombinieren des polarisierten lokalen Signals und des empfangenen Signals;

ein Mittel zum Splitten des kombinierten Signals in ein erstes Splittsignal und ein zweites Splittsignal;

ein Mittel zum Erfassen des ersten Splittsignals;

ein Mittel zum Erfassen des zweiten Splittsignals; und

ein Mittel zum Generieren von Rückkopplung, um das lokale Signal zu modifizieren.

37. Das System nach Anspruch 36, wobei das Signal durch eine automatische Polarisationssteuervorrichtung empfangen wird.

38. Das System nach Anspruch 36, wobei die geeignete Polarisation des lokalen Signals zyklisch ist.

39. Das System nach Anspruch 36, wobei das erste Splittsignal eine erste Komponente des empfangenen Signals umfasst.

40. Das System nach Anspruch 36, wobei das zweite Splittsignal eine orthogonal polarisierte zweite Komponente des empfangenen Signals umfasst.

41. Das System nach Anspruch 36, wobei das Signal optisch ist.

42. Das System nach Anspruch 36, wobei das lokale Signal durch einen Dauerstrichlaser bereitgestellt wird.

43. Das System nach Anspruch 36, wobei das lokale Signalmittel zyklisch polarisiertes Licht liefert.

44. Das System nach Anspruch 36, wobei das Mittel, um Polarisation zu steuern, eine Viertelwellenplatte ist.

45. Das System nach Anspruch 36, wobei das Kombinationsmittel ein 3-Dezibel-Splitter ist.

46. Das System nach Anspruch 36, wobei das Kombinationsmittel ein Halbspiegel ist.

47. Das System nach Anspruch 36, wobei das Splittingmittel ein Polarisationsstrahlensplitter ist; und
eine erste Komponente des Signals zu einer Achse des Polarisationsstrahlensplitters ausgerichtet ist.

48. Das System nach Anspruch 36, wobei das Erfassungsmittel eine Fotodiode ist.

49. Ein optischer Sender, umfassend:

einen Trägersignalgenerator, der betriebsfähig ist, ein optisches Signal zu generieren;
einen Intensitätsmodulator, der mit dem Trägersignalgenerator optisch gekoppelt und betriebsfähig ist, eine Intensität des optischen Signals basierend auf Daten zu modulieren, um ein intensitätsmoduliertes Signal zu generieren;
einen ersten Strahlensplitter, der mit dem Identitätsmodulator optisch gekoppelt und betriebsfähig ist, das intensitätsmodulierte Signal zu empfangen und in zwei getrennte Signale zu teilen;
einen ersten Phasenmodulator, der mit dem ersten Strahlensplitter optisch gekoppelt und betriebsfähig ist, einen Datenstrom zu empfangen und eine Phase eines optischen Signals basierend auf dem Datenstrom zu modulieren, um ein erstes moduliertes Signal zu generieren;
eine Phasenverschiebungseinrichtung, die mit dem ersten Strahlensplitter optisch gekoppelt und betriebsfähig ist, eine Phase eines optischen Signals zu verschieben;
einen zweiten Phasenmodulator, der mit der Phasenverschiebungseinrichtung optisch gekoppelt und betriebsfähig ist, einen Datenstrom zu empfangen und eine Phase eines optischen Signals basierend auf dem Datenstrom zu modulieren, um ein zweites moduliertes Signal zu generieren;
eine Halbwellenplatte, die mit dem zweiten Phasenmodulator optisch gekoppelt und betriebsfähig ist, das zweite modulierte Signal zu empfangen und ein Signal mit einem Polarisationszustand zu generieren, der zu dem Polarisationszustand des ersten modulierten Signals orthogonal ist, um ein orthogonales Signal zu generieren;
einen zweiten Polarisationsstrahlensplitter, der mit dem ersten Phasenmodulator und der Halbwellenplatte optisch gekoppelt und betriebsfähig ist, das erste modulierte Signal mit dem orthogonalen Signal zu kombinieren, um ein kombiniertes Signal zu generieren.

50. Ein optischer Empfänger, umfassend:

einen lokalen Oszillator, der mit einer Viertelwellenplatte optisch gekoppelt und betriebsfähig ist, ein optisches Signal zu generieren;
die Viertelwellenplatte, die mit einem ersten Strahlensplitter optisch gekoppelt und betriebsfähig ist, das optische Signal zu empfangen, das optische Signal zyklisch zu polarisieren, um ein zyklisch polarisiertes Signal zu generieren, und das polarisierte Signal zu dem ersten Strahlensplitter zu übertragen;

eine Polarisationsmodusdispersions-Kompensationseinrichtung zum Kompensieren von Polarisationsmodusdispersion eines optischen Verkehrssignals;

den ersten Strahlensplitter, der mit einem zweiten Polarisationsstrahlensplitter optisch gekoppelt und betriebsfähig ist, das optische Verkehrssignal zu empfangen, das optische Verkehrssignal mit dem zyklisch polarisierten Signal zu kombinieren, um ein kombiniertes Signal zu generieren, und das kombinierte Signal zu dem zweiten Polarisationsstrahlensplitter zu übertragen;

das zweite Polarisationsstrahlensplitter, das mit einer ersten Fotodiode und einer zweiten Fotodiode optisch gekoppelt und betriebsfähig ist, das kombinierte Signal zu empfangen, das kombinierte Signal in ein erstes Splittsignal und ein zweites Splittsignal zu splitten, und das erste Splittsignal zu der ersten Fotodiode und das zweite Splittsignal zu der zweiten Fotodiode zu übertragen;

die erste Fotodiode, die mit einer Entscheidungsschaltung gekoppelt und betriebsfähig ist, das erste Splittsignal zu empfangen, ein erstes Datensignal basierend auf dem ersten Splittsignal zu generieren und das erste Datensignal zu der Entscheidungsschaltung zu übertragen;

die zweite Fotodiode, die mit einer Entscheidungsschaltung gekoppelt und betriebsfähig ist, das zweite Splittsignal zu empfangen, ein zweites Datensignal basierend auf dem zweiten Splittsignal zu generieren, und das zweite Datensignal zu der Entscheidungsschaltung zu übertragen;

die Entscheidungsschaltung, die mit einem Rückkopplungssteuermodul gekoppelt und betriebsfähig ist, ein gewünschtes optisches Signal, das durch den lokalen Oszillator generiert wird, zu bestimmen, ein Steuersignal basierend auf dem gewünschten optischen Signal zu generieren und das Steuersignal zu dem Rückkopplungssteuermodul zu übertragen;

das Rückkopplungssteuermodul, das mit dem lokalen Oszillator gekoppelt und betriebsfähig ist, ein Oszillatorsteuersignal basierend auf dem Steuersignal zu generieren; und

den lokalen Oszillator, der betriebsfähig ist, das Oszillatorsteuersignal zu empfangen und das optische Signal basierend auf dem Oszillatorsteuersignal zu modifizieren.

## Revendications

1. Procédé de modulation d'un signal optique pour une transmission, comportant :

la réception d'un signal source ;
la division du signal source en un premier signal divisé et en un second signal divisé ;
la modulation du premier signal divisé en fonction d'un premier ensemble de données pour générer un premier signal modulé ;
le déphasage du second signal divisé pour générer un second signal divisé déphasé ;
la modulation du second signal divisé déphasé en fonction d'un second ensemble de données pour générer un second signal modulé ;
le contrôle de la polarisation du second signal modulé ; et
la combinaison du premier signal modulé et du second signal modulé pour générer un signal combiné ;

dans lequel ledit signal source est modulé en fonction des données.

2. Procédé selon la revendication 1, dans lequel la polarisation du second signal est contrôlée pour être orthogonale à la polarisation du premier signal modulé.

3. Procédé selon la revendication 1, dans lequel le déphasage est de quatre-vingt-dix degrés.

4. Procédé selon la revendication 1, dans lequel, immédiatement avant la combinaison, la polarisation du premier signal modulé est une polarisation transversale électrique (TE), et la polarisation du second signal polarisé est une polarisation transversale magnétique (TM).

5. Procédé selon la revendication 1, dans lequel la modulation se fait par modulation en phase.

6. Procédé selon la revendication 1, comportant en outre la modulation du signal source.

7. Procédé selon la revendication 6, dans lequel le signal source est modulé par modulation d'intensité.

**8.** Procédé selon la revendication 7, dans lequel la modulation d'intensité est périodique.

**9.** Procédé selon la revendication 7, dans lequel la modulation d'intensité est un signal d'horloge dont la fréquence et la phase sont synchronisées avec un signal de données.

**10.** Procédé selon la revendication 1, dans lequel le signal est optique.

**11.** Procédé selon la revendication 1, comportant en outre la modulation du signal combiné.

**12.** Procédé de réception d'un signal optique, comportant :

la génération d'un signal polarisé en fonction d'une rétroaction côté récepteur ;
la compensation d'un signal de trafic d'entrée pour une dispersion de mode polarisation ;
la combinaison du signal de trafic d'entrée compensé avec le signal polarisé pour générer un signal combiné ;
la division du signal combiné en un premier signal divisé et un second signal divisé ;
la détection du premier signal divisé ; et
la détection du second signal divisé.

**13.** Procédé selon la revendication 12, dans lequel la polarisation est circulaire.

**14.** Procédé selon la revendication 12, dans lequel le premier signal divisé comprend une première composante du signal reçu.

**15.** Procédé selon la revendication 12, dans lequel le second signal divisé comprend une seconde composante du signal reçu.

**16.** Procédé selon la revendication 12, dans lequel le signal de trafic d'entrée est optique.

**17.** Procédé selon la revendication 12, dans lequel le signal combiné est divisé par un diviseur de faisceau de polarisation (PBS).

**18.** Procédé selon la revendication 17, dans lequel la polarisation d'une première composante du signal de trafic d'entrée est alignée sur un axe du diviseur de faisceau de polarisation.

**19.** Système de transmission d'un signal optique, comportant :

un moyen pour fournir un signal source ;
un moyen pour diviser le signal source en un premier signal divisé et un second signal divisé ;
un moyen pour moduler le premier signal divisé en fonction d'un premier ensemble de données pour générer un premier signal divisé modulé ;
un moyen pour déphaser le second signal divisé pour générer un second signal divisé déphasé ;
un moyen pour moduler le second signal divisé déphasé en fonction d'un second d'ensemble de données pour générer un second signal modulé ;
un moyen pour contrôler la polarisation du second signal modulé pour générer un signal polarisé ; et
un moyen pour combiner le premier signal divisé modulé et le signal polarisé pour générer un signal combiné;

dans lequel ledit signal source est modulé en fonction des données.

**20.** Système selon la revendication 19, dans lequel la polarisation du second signal modulé est orthogonale à la polarisation du premier signal modulé.

**21.** Système selon la revendication 19, dans lequel le déphasage est de quatre vingt dix degrés.

**22.** Système selon la revendication 19, dans lequel, immédiatement avant la combinaison, la polarisation du premier signal modulé est une polarisation transversale électrique (TE), et la polarisation du second signal polarisé est une polarisation transversale magnétique (TM).

**23.** Système selon la revendication 19, dans lequel la modulation est une modulation en phase.

**24.** Système selon la revendication 19, comportant en outre un moyen pour moduler le signal source.

**25.** Système selon la revendication 24, dans lequel le signal source est modulé par modulation d'intensité.

**26.** Système selon la revendication 25, dans lequel la modulation d'intensité est périodique.

**27.** Système selon la revendication 25, dans lequel la modulation d'intensité est un signal d'horloge dont la fréquence et la phase sont synchronisées avec un signal de données.

**28.** Système selon la revendication 27, dans lequel le signal d'horloge se trouve à un débit symbole.

**29.** Système selon la revendication 19, dans lequel le signal est optique.

**30.** Système selon la revendication 19, dans lequel le moyen de signal source est un laser à onde continue.

**31.** Système selon la revendication 19, dans lequel le signal source est divisé par un diviseur de faisceau de polarisation ; et
dans lequel le signal source est polarisé circulairement.

**32.** Système selon la revendication 19, dans lequel le signal source est divisé par un demi miroir.

**33.** Système selon la revendication 19, dans lequel le signal source est divisé par un diviseur à trois décibels.

**34.** Système selon la revendication 19, dans lequel le moyen de déphasage est réalisé en appliquant une tension à courant continu (DC) au modulateur.

**35.** Système selon la revendication 19, dans lequel le moyen pour contrôler la polarisation est une lame demi onde.

**36.** Système de réception d'un signal optique comportant :

un moyen pour recevoir un signal ;
un moyen pour délivrer un signal local ;
un moyen pour contrôler une polarisation du signal local afin de générer un signal local polarisé de façon appropriée ;
un moyen pour compenser une dispersion de mode polarisation du signal reçu ;
un moyen pour combiner le signal local polarisé et le signal reçu ;
un moyen pour diviser le signal combiné en un premier signal divisé et un second signal divisé ;
un moyen pour détecter le premier signal divisé ;
un moyen pour détecter le second signal divisé ; et
un moyen pour générer une rétroaction afin de modifier le signal local.

**37.** Système selon la revendication 36, dans lequel le signal est reçu par un contrôleur de polarisation automatique.

**38.** Système selon la revendication 36, dans lequel la polarisation appropriée du signal local est circulaire.

**39.** Système selon la revendication 36, dans lequel le premier signal divisé comprend une première composante du signal reçu.

**40.** Système selon la revendication 36, dans lequel le second signal divisé comprend une seconde composante polarisée orthogonalement du signal reçu.

**41.** Système selon la revendication 36, dans lequel le signal est optique.

**42.** Système selon la revendication 36, dans lequel le signal local est délivré par un laser à onde continue.

**43.** Système selon la revendication 36, dans lequel le moyen de signal local produit une lumière polarisée circulairement.

**44.** Système selon la revendication 36, dans lequel le moyen pour contrôler la polarisation est une lame quart d'onde.

**45.** Système selon la revendication 36, dans lequel le moyen combineur est un diviseur à 3 décibels.

**46.** Système selon la revendication 36, dans lequel le moyen combineur est un demi miroir.

**47.** Système selon la revendication 36, dans lequel le moyen de division est un diviseur de faisceau de polarisation ; et une première composante du signal est alignée sur un axe du diviseur de faisceau de polarisation.

**48.** Système selon la revendication 36, dans lequel le moyen de détection est une photodiode.

**49.** Transmetteur optique, comportant :

un générateur de signal porteur, pouvant être actionné pour générer un signal optique ;
un modulateur d'intensité, couplé optiquement au générateur de signal porteur et pouvant être actionné pour moduler une intensité du signal optique en fonction des données pour générer un signal d'intensité modulé ;
un premier diviseur de faisceau, couplé optiquement au modulateur d'intensité et pouvant être actionné pour recevoir et diviser le signal d'intensité modulé en deux signaux distincts ;
un premier modulateur de phase, couplé optiquement au premier diviseur de faisceau et pouvant être actionné pour recevoir un flux de données et pour moduler une phase d'un signal optique en fonction du flux de données pour générer un premier signal modulé ;
un déphaseur, couplé optiquement au premier diviseur de faisceau et pouvant être actionné pour déphaser un signal optique ;
un second modulateur de phase, couplé optiquement au déphaseur et pouvant être actionné pour recevoir un flux de données et pour moduler une phase d'un signal optique en fonction du flux de données pour générer un second signal modulé ;
une lame demi onde, couplée optiquement au second modulateur de phase et pouvant être actionnée pour recevoir le second signal modulé et générer un signal avec un état de polarisation qui est orthogonal à l'état de polarisation du premier signal modulé afin de générer un signal orthogonal ;
un second diviseur de faisceau de polarisation, couplé optiquement au premier modulateur de phase et à la lame demi onde et pouvant être actionné pour combiner le premier signal modulé avec le signal orthogonal afin de générer un signal combiné.

**50.** Récepteur optique, comportant :

un oscillateur local couplé optiquement à une lame quart d'onde et pouvant être actionné pour générer un signal optique ;
la lame quart d'onde couplée optiquement à un premier diviseur de faisceau et pouvant être actionnée pour recevoir le signal optique, polariser circulairement le signal optique afin de générer un signal polarisé circulairement, et transmettre le signal polarisé au premier diviseur de faisceau ;
un compensateur de dispersion de mode de polarisation pour compenser une dispersion de mode de polarisation d'un signal de trafic optique ;
le premier diviseur de faisceau couplé optiquement à un second diviseur de faisceau de polarisation et pouvant être actionné pour recevoir le signal de trafic optique, combiner le signal de trafic optique avec le signal polarisé circulairement afin de générer un signal combiné, et transmettre le signal combiné au second diviseur de faisceau de polarisation;
le second diviseur de faisceau de polarisation couplé optiquement à une première photodiode et une seconde photodiode et pouvant être actionné pour recevoir le signal combiné, diviser le signal combiné en un premier signal divisé et un second signal divisé, et transmettre le premier signal divisé à la première photodiode et le second signal divisé à la seconde photodiode ;
la première photodiode couplée à un circuit de décision et pouvant être actionnée pour recevoir le premier signal divisé, générer un premier signal de données en fonction du premier signal divisé, et transmettre le premier signal de données au circuit de décision ;
la seconde photodiode couplée à un circuit de décision et pouvant être actionnée pour recevoir le second signal divisé, générer un second signal de données en fonction du second signal divisé, et transmettre le second signal de données au circuit de décision ;
le circuit de décision couplé à un module de contrôle de rétroaction et pouvant être actionné pour déterminer un signal optique désiré généré par l'oscillateur local, générer un signal de contrôle en fonction du signal optique désiré, et transmettre le signal de contrôle au module de contrôle de rétroaction ;
le module de contrôle de rétroaction couplé à l'oscillateur local et pouvant être actionné pour générer un signal de contrôle d'oscillateur en fonction du signal de contrôle ; et
l'oscillateur local pouvant être actionné pour recevoir le signal de contrôle d'oscillateur et modifier le signal optique en fonction du signal de contrôle d'oscillateur.

## FIG. 1

*FIG. 1*

## FIG. 2A

*FIG. 2A*

## FIG. 2B

*FIG. 2B*

FIG. 3

FIG. 4

FIG. 5

FIG. 6

FIG. 7

FIG. 8

## FIG. 9

START

100 — PROVIDE A CARRIER SIGNAL

105 — SPLIT CARRIER SIGNAL

110 — MODULATE FIRST SPLIT SIGNAL BASED ON FIRST DATA INPUT

115 — SHIFT PHASE OF SECOND SPLIT SIGNAL

120 — MODULATE PHASE SHIFTED SECOND SPLIT SIGNAL BASED ON SECOND DATA INPUT

125 — CONTROL POLARIZATION OF SECOND MODULATED SIGNAL TO MAKE ORTHOGONAL TO FIRST MODULATED SIGNAL

130 — COMBINE MODULATED FIRST SIGNAL AND MODULATED SECOND SIGNAL

135 — MODULATE COMBINED SIGNAL

140 — TRANSMIT MODULATED COMBINED SIGNAL

END

## FIG. 10

START

RECEIVE SIGNAL — 200

PROVIDE A LOCAL SIGNAL — 205

CONTROL POLARIZATION OF LOCAL SIGNAL — 210

COMBINE LOCAL SIGNAL WITH RECEIVED SIGNAL — 215

SPLIT COMBINED SIGNAL — 220

DETECT A FIRST COMPONENT OF THE SPLIT SIGNAL — 225

DETECT A SECOND COMPONENT OF THE SPLIT SIGNAL — 230

GENERATE FEEDBACK TO MODIFY LOCAL SIGNAL — 235

REPEAT — 240